(19) Europäisches Patentamt
European Patent Office
Office européen des brevets

(11) **EP 4 119 517 B1**

(12) **EUROPEAN PATENT SPECIFICATION**

(45) Date of publication and mention
of the grant of the patent:
**28.05.2025 Bulletin 2025/22**

(21) Application number: **21788634.0**

(22) Date of filing: **16.04.2021**

(51) International Patent Classification (IPC):
***C04B 7/02*** *(2006.01)* ***C04B 22/08*** *(2006.01)*

(52) Cooperative Patent Classification (CPC):
(C-Sets available)
**C04B 14/042; C04B 14/043; C04B 14/045;
C04B 28/02;** Y02P 40/18; Y02W 30/91 (Cont.)

(86) International application number:
**PCT/JP2021/015768**

(87) International publication number:
**WO 2021/210685 (21.10.2021 Gazette 2021/42)**

(54) **CEMENT ADMIXTURE AND CEMENT COMPOSITION**

ZEMENTZUSATZMITTEL UND ZEMENTZUSAMMENSETZUNG

ADJUVANT DE CIMENT ET COMPOSITION DE CIMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.04.2020 JP 2020074204**

(43) Date of publication of application:
**18.01.2023 Bulletin 2023/03**

(73) Proprietor: **Denka Company Limited
Tokyo 103-8338 (JP)**

(72) Inventors:
• **MORI, Taiichiro
Tokyo 103-8338 (JP)**
• **YOSHIOKA, Maho
Tokyo 103-8338 (JP)**
• **SHIMAZAKI, Daiki
Tokyo 103-8338 (JP)**
• **ARANO, Noriyuki
Tokyo 103-8338 (JP)**

(74) Representative: **Ter Meer Steinmeister & Partner
Patentanwälte mbB
Nymphenburger Straße 4
80335 München (DE)**

(56) References cited:
WO-A1-03/016234 WO-A1-2014/002727
JP-A- 2006 131 474 JP-A- 2006 131 474

(52) Cooperative Patent Classification (CPC): (Cont.)

C-Sets
**C04B 14/042, C04B 40/0042;**
**C04B 14/043, C04B 40/0042;**
**C04B 14/045, C04B 40/0042;**
**C04B 28/02, C04B 14/042, C04B 14/043,**
**C04B 14/045**

**Description**

Technical Field

The present invention relates to a cement admixture, and to the use of the cement admixture for preparing a cement composition that can be used in the civil engineering and architecture fields, etc.

Background Art

Concretes use a large amount of cement as a raw material, and thus are deemed to be materials with a high $CO_2$ emission amount. This is mainly because a large amount of fossil fuel is used so as to obtain a combustion energy for a furnace, and a decarbonation reaction ($CaCO_3 \rightarrow CaO + CO_2$) of limestone occurs during the process of the production of a cement. It is an important theme as one of the countermeasures for global warming to decrease $CO_2$ emission amounts as concretes.

In order to decrease a total amount of $CO_2$ ejected during the production of concrete products, it is effective to decrease the use amount of a cement by incorporating a large amount of byproduct (a blast furnace slag micropowder, fly ash, etc.) as an alternative of the cement, and various studies are ongoing.

On the other hand, a technique for obtaining a concrete product having high durability in which a surface layer part has been densified by $CO_2$ absorption by forcedly subjecting a concrete containing a non-hydraulic compound such as $\gamma$-$C_2S$ ($\gamma$-$2CaO \cdot SiO_2$; also called a belite y phase) as an admixture to carbonation curing is known (for example, PTL 1). $\gamma$-$C_2S$ does not cause a hydration reaction, and reacts with $CO_2$ to generate a gel rich in $CaCO_3$ and $SiO_2$. These products fill the gaps in a cement matrix, and dramatically improves the durability of the surface layer of the concrete product. In this case, the total $CO_2$ emission amount in obtaining a concrete product is decreased by the amount of $CO_2$ absorbed by the concrete in $CO_2$ carbonation curing.

PTL 2 discloses a hydraulic cement composition that has excellent strength development characteristics in a low temperature environment, and that is excellent in sulfate resistance and carbonation resistance. The hydraulic cement composition comprises $CaO$, $Al_2O_3$, $SiO_2$ and $Li_2O$, and has a vitrification rate of 70% or more. In one embodiment, the hydraulic cement composition comprises 40 to 55 parts by mass of $CaO$, 25 to 40 parts by mass of $Al_2O_3$, 10 to 25 parts by mass of $SiO_2$, 1 to 10 parts by mass of $Li_2O$, and optionally $\gamma$-$2CaO \cdot SiO_2$.

Citation List

Patent Literature

    PTL 1: JP 2006-182583 A
    PTL 2: JP 2006-131474 A

Summary of Invention

Technical Problem

However, in a high durability concrete in which a non-hydraulic compound such as $\gamma$-$C_2S$ is incorporated as shown in PTL 1, it is assumed that a structural body to be aged is disposed in a shielded space capable of maintaining a predetermined carbon dioxide gas concentration. Therefore, in order to make a huge concrete structural body that cannot be housed in an aging equipment as a subject to be aged, a cement admixture that can further accelerate the carbonation of the incorporated non-hydraulic compound is required.

Accordingly, the present invention was made so as to solve the above-mentioned problem, and aims at providing a cement admixture that can promote a carbonation reaction of a non-hydraulic compound in carrying out carbonation curing.

Solution to Problem

The inventors did intensive studies so as to solve the problem as mentioned above, and consequently found that a cement admixture containing Li obtained by undergoing a thermal treatment process together with a non-hydraulic compound containing Li at a predetermined percentage can solve the above-mentioned problem, and completed the present invention. The present invention is defined in the claims.

In a first aspect, the present invention thus relates to a cement admixture as defined in claim 1. The cement admixture contains one kind or two or more kinds of non-hydraulic compound(s) selected from the group consisting of $\gamma$-$2CaO \cdot SiO_2$, $3CaO \cdot 2SiO_2$, $\alpha$-$CaO \cdot SiO_2$, and calcium magnesium silicate, wherein the non-hydraulic compound contains Li at an amount of 0.001 to 0.90% by mass in terms of lithium oxide ($Li_2O$).

In a second aspect, the present invention relates to a use of the cement admixture of the first aspect as defined in claim 6. The cement admixture is used for preparing a cement composition.

Advantageous Effects of Invention

According to the present invention, a cement admixture capable of promoting a carbonation reaction of a non-hydraulic compound in carrying out carbonation curing can be provided.

Description of Embodiments

Hereinafter an exemplary embodiment of the present invention will be explained in detail. Note that the parts and % used in the present specification are based on mass unless otherwise defined.

[Cement Admixture]

The cement admixture of the present invention contains one kind or two or more kinds of non-hydraulic compound(s) selected from the group consisting of $\gamma$-$2CaO \cdot SiO_2$, $3CaO \cdot 2SiO_2$, $\alpha$-$CaO \cdot SiO_2$, and calcium magnesium silicate.

Furthermore, the cement admixture contains Li in the non-hydraulic compound, and the content thereof is 0.001 to 0.90% in terms of lithium oxide. By the Li in this predetermined amount, it is assumed that the generation of vaterite, which is a kind of calcium carbonate of C-S-H (calcium silicate hydrate), and it is considered that a denser cured state can be obtained more easily by carbonation curing.

Here, "contains Li in the non-hydraulic compound" refers to a state in which $Li_2O$ is contained as a chemical composition in the non-hydraulic compound (the presence can be confirmed by ICP luminescence spectroscopy), whereas $Li_2O$ is not identified in X-ray diffractometry, which is not a state in which a non-hydraulic compound and a Li compound are simply physically mixed. Such state can be obtained by mixing the respective raw materials and subjecting the mixture to a thermal treatment at a high temperature of 1,000°C or more. Hereinafter the respective components, etc. will be explained.

($\gamma$-$2CaO \cdot SiO_2$)

$\gamma$-$2CaO \cdot SiO_2$ is known as a low temperature phase among the compounds represented by $2CaO \cdot SiO_2$, and are completely different from $\alpha$-$2CaO \cdot SiO_2$, $\alpha'$-$2CaO \cdot SiO_2$ and $\beta$-$2CaO \cdot SiO_2$, which are high temperature phases. All of these are represented by $2CaO \cdot SiO_2$, but have different crystalline structures and densities.

($3CaO \cdot 2SiO_2$)

$3CaO \cdot 2SiO_2$ is a mineral containing CaO in pseudowollastonite, and called rankinite. It is a chemically stable mineral having no hydration activity, but has a large carbonation accelerating effect.

($\alpha$-$CaO \cdot SiO_2$)

$\alpha$-$CaO \cdot SiO_2$ (Type $\alpha$ wollastonite) is known as a high temperature phase among compounds represented by $CaO \cdot SiO_2$, and is completely different from $\beta$-$CaO \cdot SiO_2$, which is a low temperature phase. All of these are represented by $CaO \cdot SiO_2$, but have different crystalline structures and densities.

Naturally generating wollastonite is $\beta$-$CaO \cdot SiO_2$ of a low temperature phase. $\beta$-$CaO \cdot SiO_2$ has a needle-shaped crystalline and is utilized as an inorganic fibrous substance such as wollastonite fiber, but does not have a carbonation accelerating effect as in $\alpha$-$CaO \cdot SiO_2$.

(Calcium magnesium silicate)

Calcium magnesium silicate is a collective term of $CaO$-$MgO$-$SiO_2$-based compounds. Herein, Merwinite represented by $3CaO \cdot MgO \cdot 2SiO_2$ ($C_3MS_2$) is preferable, and a high carbonation accelerating effect is achieved by Merwinite.

The non-hydraulic compound as mentioned above can be one kind or two or more kinds, and the content of Li in said non-hydraulic compound is 0.001 to 0.90%, preferably 0.005 to 0.90%, more preferably 0.010 to 0.90%, further preferably 0.015 to 0.80% in terms of lithium oxide. If the content of Li is lower than 0.001% in terms of lithium oxide, a carbonation accelerating effect cannot be obtained. If the content exceeds 1.0%, the cost is high. The content of Li in terms of lithium oxide can be measured by the method described in Examples.

Note that in the case where the non-hydraulic compound is two or more kinds, the content of Li refers to a content of the Li with respect to the total of the two or more kinds of non-hydraulic compounds in terms of lithium oxide.

Among the above-mentioned non-hydraulic compounds, $\gamma$-2CaO·SiO$_2$ is specifically preferable in that it accompanies a powderization phenomenon called dusting during the production, and thus requires a lower energy for pulverizing as compared to other compounds, has a high carbonation accelerating effect for a long time period, whereas it has a very high effect of suppressing neutralization when combined with a blast furnace cement at a low water binder ratio.

The non-hydraulic compound can be obtained by incorporating a CaO raw material, a SiO$_2$ raw material, a MgO raw material and a Li raw material at a predetermined molar ratio and thermally treating the raw materials. Examples of the CaO raw material include calcium carbonates such as limestone, calcium hydroxides such as slaked lime, and by-produced slaked limes such as acetylene by-produced slaked lime, and micropowders generated from waste concrete masses. Examples of the SiO$_2$ raw material include various siliceous dusts generated as industrial byproducts represented by, for example, silica stone and clay, as well as silica fume and fly ash. Examples of the MgO raw material can include magnesium hydroxide, basic calcium carbonate and dolomite. Furthermore, examples of the Li raw material can include lithium carbonate. Note that in the case where Li is included in the CaO raw material, the SiO$_2$ raw material and the MgO raw material, it is not necessary to newly add an Li raw material. From the decreasing of a CO$_2$ emission amount derived from non-energy during a thermal treatment, one kind or two or more kinds selected from industrial by-products containing CaO such as by-produced slaked lime, micropowders generated from waste concrete masses, municipal waste incinerated ash, and sewage water sludge incinerated ash and industrial byproducts including CaO can be utilized. Among these, use of by-produced slaked lime, which contains a smaller amount of impurity as compared to other industrial byproducts, is further preferable.

Examples of the by-produced slaked lime include acetylene by-produced slaked limes such as by-produced slaked limes (there are a dry product and a wet product based on the difference of the method for producing acetylene gas), which are by-produced by the method for producing acetylene gas by the calcium carbide process, and by-produced slaked lime contained in dusts captured by a wet dust collection step of a calcium carbide electric furnace. The by-produced slaked lime includes, for example, 65 to 95% (preferably 70 to 90%) of calcium hydroxide, and 1 to 10% of calcium carbonate, and 0.1 to 6.0% (preferably 0.1 to 3.0%) of iron oxide. The percentages of these can be confirmed by a mass decrease obtained by fluorescence X-ray measurement, and differential thermal gravimetry (TG-DTA) (Ca(OH)$_2$: around 405°C to 515°C, CaCO$_3$ : around 650°C to 765°C). A volume average particle size measured by laser diffraction and scattering method is about 50 to 100 $\mu$m. Furthermore, in JIS K 0068 "Method for Measuring Water Content in Chemical Product", a water content measured by the loss on drying method is preferably 10% or less. Furthermore, sulfur compounds such as CaS, A1$_2$O$_3$ and CaC$_2$·CaS can be contained, but they are preferably 2% or less.

The thermal treatment at a high temperature of 1,000°C or more as already mentioned above is not specifically limited, and can be carried out by, for example, a rotary kiln or an electric furnace. The thermal treatment temperature is not unambiguously defined, but is generally carried out in a range of about 1,000 to 1,800°C, and carried out in a range of about 1,200 to 1,600°C in many cases.

This present invention can also use an industrial byproduct containing the non-hydraulic compound as already mentioned above. In this case, an impurity co-exists. Examples of such industrial byproduct include steel slag, etc.

The CaO raw material, SiO$_2$ raw material and MgO raw material can contain an impurity, but it is not specifically a problem in a scope where the effect of the present invention is not inhibited. Specific examples of the impurity include Al$_2$O$_3$ ,Fe$_2$O$_3$ ,TiO$_2$, MnO, Na$_2$O, K$_2$O, S, P$_2$O$_5$, F, B$_2$O$_3$, and chlorine. Furthermore, examples of the co-existing compound include free calcium oxide, calcium hydroxide, calcium aluminate, calcium aluminosilicate, calcium ferrite and calcium aluminoferrite, calcium phosphate, calcium borate, magnesium silicate, leucite (K$_2$O,Na$_2$O)·Al$_2$O$_3$·SiO$_2$, spinel MgO·Al$_2$O$_3$ ,magnetite Fe$_3$O$_4$, and the above-mentioned sulfur compounds such as CaS, A1$_2$O$_3$ and CaC$_2$·CaS.

Of these impurities, the content of S (sulfur) in the non-hydraulic compound is preferably 1.0% or less, more preferably 0.7% or less, further preferably 0.5% or less in terms of sulfur trioxide (SO$_3$). By being 1.0% or less, a sufficient carbonation accelerating effect can be obtained, and condensation and curing characteristics can be set to be in appropriate ranges. The content of S in terms of sulfur trioxide (SO$_3$) can be measured by fluorescence X-ray measurement. Note that the S (sulfur) in the non-hydraulic compound can be present as long as it is about 2% in terms of sulfur trioxide.

In this admixture, the content of the non-hydraulic compound (the case where plural kinds are contained, the content to the total amount) is preferably 65% or more, more preferably 70% or more, further preferably 75% or more. Note that hydraulic 2CaO·SiO$_2$ other than $\gamma$-2CaO·SiO$_2$ can be admixed, and can be admixed up to 35% at the maximum.

The content of $\gamma$-2CaO·SiO$_2$ in this admixture is preferably 35% or more, more preferably 45% or more.

Furthermore, the upper limit value of the upper limit value of $\gamma$-2CaO·SiO$_2$ is not specifically limited. Among steel-making slags, an electric furnace reduction period slag or a stainless slag with a large content of $\gamma$-2CaO·SiO$_2$ is preferable.

Furthermore, in this admixture, from the viewpoint of easier expression of the effect, it is preferable to contain 0.002 to 0.5 parts of Li$_2$O, 60 to 70 parts of CaO, 30 to 45 parts of SiO$_2$, and 0.5 to 5 parts of Al$_2$O$_3$ as chemical components in 100 parts of the cement admixture. The content of Li$_2$O can be measured by the method described in the following Examples. Furthermore, CaO, SiO$_2$ and Al$_2$O$_3$ can be measured by fluorescence X-ray.

Furthermore, as the chemical component, the total of Li$_2$O, CaO, SiO$_2$ and Al$_2$O$_3$ is preferably 90 parts or more, more preferably 95 to 100 parts in 100 parts of the cement admixture.

The method for quantifying the non-hydraulic compound in this admixture can include the Rietveld method by powder X-ray diffractometry.

The Blaine specific surface area of this admixture is not specifically limited, and is preferably 1,500 cm$^2$/g or more, and the upper limit is preferably 8,000 cm$^2$/g or less. Among these, 2,000 to 6,000 cm$^2$/g is more preferable, and 4,000 to 6,000 cm$^2$/g is the most preferable. Since the Blaine specific surface area is 2,000 cm$^2$/g or more, a fine material separation resistance can be obtained, and the carbonation accelerating effect becomes sufficient. Furthermore, by being 8,000 cm$^2$/g or less, the pulverizing power in pulverization does not increase and thus the method is cost efficient, and weathering is suppressed and the deterioration over time of the quality can be suppressed.

[Cement Composition]

The cement composition disclosed herein contains the cement admixture of the present invention.

The use amount of the cement admixture is not specifically limited, and generally, it is preferably 5 to 80 parts, more preferably 5 to 50 pars, and further preferably 10 to 40 parts in total 100 parts of the cement and this admixture. By being 5 parts or more, hydration heat can be decreased, and by being 80 parts or less (specifically 50 parts or less), the strength expressing property becomes fine.

The use amount of water with respect to the cement composition is not specifically limited, and a generally used range is used. Specifically, the amount of water with respect to 100 parts of the cement and this admixture in total is preferably 25 to 60 parts. By being 25 parts or more, a sufficient workability can be obtained, and by being 60 parts or less, the strength expression and carbonation accelerating effects can be made sufficient.

Note that, in order to correspond to 32.5 N/mm$^2$ specification by using this cement admixture, it is sufficient to admix about 10 to 20 parts of this cement admixture in 100 parts of this cement admixture irrespective of the kind of the non-hydraulic compound, and in order to correspond to a 42.5 N/mm$^2$ specification product class, it is sufficient to admix about 20 to 35 parts in 100 parts of this cement admixture.

The cement used in the cement composition is not specifically limited, those containing a Portland cements are preferable, and examples include a variety of Portland cements such as normal Portland cement, early strength Portland cement, super-early strength Portland cement, low-heat Portland cement, and moderate-heat Portland cement. Furthermore, examples can also include a variety of mixed cements of those Portland cements admixed with blast-furnace slag, fly ash or silica, waste-utilizing cements produced by using municipal waste incineration ash or sewage water sludge incineration ash as a raw material, so-called Eco-Cements (R), and filler cements mixed with a limestone powder. Furthermore, examples can also include geopolymer cements, sulfoaluminate cements, limestone calcination clay cements (LC3), which emit CO$_2$ in a smaller amount than that of conventional cements. One kind or two or more kinds of these can be used.

The cement composition is beneficial to blast furnace cements and Eco-Cements, for which suppression of neutralization is strongly demanded at a low water binder ratio, and specifically, it is the most preferable to use in combination with a blast furnace cement.

The granularity of the cement composition is not specifically limited since it depends on the intended purpose and use, generally, it is preferably 2,500 to 8,000 cm$^2$/g, more preferably 3,000 to 6,000 cm$^2$/g by a Blaine specific surface area. By being 2,500 cm$^2$/g or more, the strength expression property can be sufficiently obtained, and by being 8,000 cm$^2$/g or less, the workability can be improved.

In the cement composition, besides the cement and the present admixture, one kind or two or more kinds of known and publicly-used additives or admixtures used in general cement materials such as aggregates such as sand and gravel, granulated blast furnace slag fine powders, blast furnace slow-cooled slag powders, limestone fine powders, fly ash, and admixture materials such as silica fume, and natural pozzolans such as volcanic ash, expanders, rapid hardeners, water reducers, AE water reducers, high-performance water reducers, high-performance AE reducers, defoamers, thickeners, rust inhibitors, anti-freeze agents, shrinkage reducers, polymers, condensation regulators, clay minerals such as bentonite, and anionic exchangers such as hydrotalcite can be used in a range in which the object of the present invention is not substantially inhibited.

The cement composition can be prepared by mixing the respective materials at the time of construction, or it is allowed to mix part or entirety in advance. Furthermore, the method for mixing the respective materials and water is also not specifically limited, and the respective materials can be mixed at the time of construction, or it is allowed to mix part or entirety in advance. Alternatively, part of the material can be mixed with water and then the residual material can be mixed.

As the mixing apparatus, any existing apparatus can be used, and for example, a tilting mixer, an omni mixer, a Henschel mixer, a Type-V mixer and a Nauta mixer can be used.

Examples

Hereinafter the present invention will further be explained in detail by using Examples and Comparative Examples.

[Experimental Example 1]

(1) Preparation of cement admixture

Cement admixtures A to D were prepared as follows.

Cement admixture A: Li-containing $\gamma$-2CaO·SiO$_2$. Calcium carbonate of reagent-grade 1 and silicon dioxide of reagent-grade 1 were mixed at a molar ratio of 2 : 1, and lithium carbonate of reagent-grade 1 was further mixed so that the content of Li with respect to the mixture became 0.1% (internal replacement) in terms of lithium oxide (Li$_2$O), and the mixture was thermally treated at 1,400°C for 2 hours, and left to room temperature to prepare Cement admixture A having a Blaine specific surface area of 4,000 cm$^2$/g.

Cement admixture B: Li-containing 3CaO·2SiO$_2$. Calcium carbonate of reagent-grade 1 and silicon dioxide of reagent-grade 1 were mixed at a molar ratio of 3 : 2, and lithium carbonate of reagent-grade 1 was further mixed so that the content of Li with respect to the mixture became 0.1% (internal replacement) in terms of lithium oxide (Li$_2$O), and the mixture was thermally treated at 1,400°C for 2 hours, and left to room temperature to prepare Cement admixture B having a Blaine specific surface area of 4,000 cm$^2$/g.

Cement admixture C: Li-containing $\alpha$-CaO·SiO$_2$. Calcium carbonate of reagent-grade 1 and silicon dioxide of reagent-grade 1 were mixed at a molar ratio of 1 : 1, and lithium carbonate of reagent-grade 1 was further mixed so that the content of Li with respect to the mixture became 0.1% (internal replacement) in terms of lithium oxide (Li$_2$O), and the mixture was thermally treated at 1,500°C for 2 hours, and left to room temperature to prepare Cement admixture C having a Blaine specific surface area of 4,000 cm$^2$/g.

Cement admixture D: Li-containing 3CaO·MgO·2SiO$_2$. Calcium carbonate of reagent-grade 1, magnesium oxide of reagent-grade 1, and silicon dioxide of reagent-grade 1 were mixed at a molar ratio of 3 : 1 : 2, and lithium carbonate of reagent-grade 1 was further mixed so that the content of Li with respect to the mixture became 0.1% (internal replacement) in terms of lithium oxide (Li$_2$O), and the mixture was thermally treated at 1,400°C for 2 hours, and left to room temperature to prepare Cement admixture D having a Blaine specific surface area of 4,000 cm$^2$/g.

Cement admixture E: $\beta$-2CaO·SiO$_2$. Calcium carbonate of reagent-grade 1 and silicon dioxide of reagent-grade 1 were mixed at a molar ratio of 2 : 1, and the mixture was thermally treated at 1,400°C for 2 hours, left to room temperature and pulverized, and similar thermal treatments were repeated until the peak of $\gamma$-2CaO·SiO$_2$ was not confirmed by XRD. After a peak of only $\beta$-2CaO·SiO$_2$ was confirmed, Cement admixture E having a Blaine specific surface area of 4,000 cm$^2$/g was prepared.

Cement admixture F: $\gamma$-2CaO·SiO$_2$. Calcium carbonate of reagent-grade 1 and silicon dioxide of reagent-grade 1 were mixed at a molar ratio of 2 : 1, and the mixture was thermally treated at 1,400°C for 2 hours, left to room temperature, whereby $\gamma$-2CaO·SiO$_2$ having a Blaine specific surface area of 4,000 cm$^2$/g was prepared.

Cement admixture G: Li$_2$O + $\gamma$-2CaO·SiO$_2$. Calcium carbonate of reagent-grade 1 and silicon dioxide of reagent-grade 1 were mixed at a molar ratio of 2 : 1, and the mixture was thermally treated at 1,400°C for 2 hours, left to room temperature, whereby $\gamma$-2CaO·SiO$_2$ having a Blaine specific surface area of 4,000 cm$^2$/g was prepared. Furthermore, lithium carbonate of reagent-grade 1 was thermally treated at 1,400°C for 2 hours, and left to room temperature to prepare a Li$_2$O powder. A Li$_2$O powder (lithium carbonate of reagent-grade 1 thermally treated at 1,400°C for 2 hours) was internally mixed with $\gamma$-2CaO·SiO$_2$ so that Li$_2$O was set to 0.1% (internal replacement) to prepare Cement admixture G. Note that the Li content in terms of lithium oxide in each cement admixture was measured by an ICP luminescence spectrometer (VISTA-PRO manufactured by Hitachi High-Tech Science Corporation). Furthermore, it was confirmed that the Li content was similar to the charged amount by an absolute calibration curve method using a diluted mixed solution for XSTC-22 ICP by SPEX Industries Inc. Note that the measurement conditions are as mentioned below.

· Li measured wavelength: 670.783 nm
· BG correction: fitting curve method
· Standard solution for calibration curve: a mixed solution for XSTC-22 ICP by SPEX Industries Inc, was diluted and used

Calibration curve range: a five-point calibration curve of 0-5 mg/L (0 mg/L, 0.1 mg/L, 0.5 mg/L, 1 mg/L, 5 mg/L)
· Quantified by absolute calibration curve method

(2) Evaluation of carbonation reaction rate of admixture

Five grams of each admixture was weighed in an evaporating basin, and subjected to carbonation curing in accordance with JIS A 1153 for 7 days (room temperature: 20°C, relative humidity: 60%, 5%-$CO_2$ concentration). After the carbonation curing for 7 days, thermogravimetry (TG) was carried out using differential thermogravimetry (manufactured by NETZSCH, Type 2020SA), at a sample weight of 50 ± 2 mg, and a temperature raising velocity of 10°C/min from room temperature to 1,000°C under a nitrogen flow environment. The $CaCO_3$ generation amount (carbonation reaction rate) was obtained by calculating the decreased amount around 650°C to 765°C in the TG curve as the decreased amount by the decarbonation of $CaCO_3$. The results are shown in Table 1.

$$\text{Carbonation reaction rate (\%)} = [\Delta m_{CaCO3}/(m_0 - m_{1,000})] \times 100.09 \, / \, 44.01 \times 100$$

In the equation, $\Delta m_{CaCO3}$: decarbonation amount of calcium carbonate (mg), $m_0$: amount of sample used for measurement (mg), $m_{1,000}$: amount of decrease of mass up to 1,000°C (mg)

(3) Measurement of vaterite amount by XRD measurement

The measurement was carried out by Powder X-ray diffraction (manufactured by Rigaku Corporation, SmartLab). An internal standard substance such as aluminum oxide or magnesium oxide was added to a cement admixture at a predetermined amount, the mixture was sufficiently mixed in an agate mortar, and powder X-ray diffractometry was then carried out. The measurement result was analyzed by quantification software, and a vaterite content was obtained. As the quantification software, "SmartlabStudio II" manufactured by Rigaku Corporation was used. The results are shown in Table 1.

Table 1

|  |  | Evaluation of carbonation reaction rate (%) | Amount of vaterite (%) | Remarks |
|---|---|---|---|---|
| Admixture A | $\gamma$-2CaO·SiO$_2$<br>Li (in terms of lithium oxide): 0.1% | 31.2 | 8.8 | Example |
| Admixture B | 3CaO·2SiO$_2$<br>Li (in terms of lithium oxide): 0.1% | 30.7 | 9.3 | Example |
| Admixture C | $\alpha$-2CaO·SiO$_2$<br>Li (in terms of lithium oxide): 0.1% | 30.6 | 7.1 | Example |
| Admixture D | 3CaO·MgO·2SiO$_2$<br>Li (in terms of lithium oxide): 0.1% | 30.1 | 7.3 | Example |
| Admixture E | $\beta$-2CaO·SiO$_2$ | 25.0 | 0.7 | Comparative Example |
| Admixture F | $\gamma$-2CaO·SiO$_2$ | 25.0 | 3.8 | Comparative Example |
| Admixture G | Li$_2$O + $\gamma$-CaO·SiO$_2$ | 25.0 | 4.2 | Comparative Example |

[Experimental Example 2]

Cement admixtures A-1 to A-7 and Cement admixtures C-1 to C-7 were prepared in similar manners to the preparations of Cement admixture A and Admixture C in Experiment 1, except that the lithium carbonate of reagent-grade 1 was mixed in the respective preparations of Cement admixture A and Admixture C of Experiment 1 so that the content of Li to the mixture became 0.0005%, 0.002%, 0.006%, 0.1%, 0.15%, 0.8%, 0.9%, 1.0%, 1.1% in terms of lithium oxide ($Li_2O$) (internal replacement each). Similar evaluations to that for Experiment 1 were carried out for the respective cement admixtures. The results are shown in Table 2.

Table 2

| | | Evaluation of carbonation reaction rate (%) | Amount of vaterite (%) | Remarks |
|---|---|---|---|---|
| Admixture A-0 | $\gamma$-2CaO·SiO$_2$<br>Li (in terms of lithium oxide): 0.0005% | 24.1 | 3.3 | Comparative Example |
| Admixture A-1 | $\gamma$-2CaO·SiO$_2$<br>Li (in terms of lithium oxide): 0.002% | 30.1 | 4.4 | Example |
| Admixture A-2 | $\gamma$-2CaO·SiO$_2$<br>Li (in terms of o lithium xide): 0.006% | 30.9 | 7.5 | Example |
| Admixture A | $\gamma$-2CaO·SiO$_2$<br>Li (in terms of lithium oxide): 0.10% | 31.2 | 8.8 | Example |
| Admixture A-3 | $\gamma$-2CaO·SiO$_2$<br>Li (in terms of lithium oxide): 0.15% | 30.9 | 9.1 | Example |
| Admixture A-4 | $\gamma$-2CaO·SiO$_2$<br>Li (in terms of lithium oxide): 0.80% | 30.7 | 9.3 | Example |
| Admixture A-5 | $\gamma$-2CaO·SiO$_2$<br>Li (in terms of lithium oxide): 0.90% | 30.5 | 9.2 | Example |
| Admixture A-6 | $\gamma$-2CaO·SiO$_2$<br>Li (in terms of lithium oxide): 1.0% | 30.3 | 8.9 | Reference Example |
| Admixture A-7 | $\gamma$-2CaO·SiO$_2$<br>Li (in terms of lithium oxide): 1.1% | 23.6 | 3.1 | Comparative Example |
| Admixture C-0 | $\alpha$-CaO·SiO$_2$<br>Li (in terms of lithium oxide): 0.0005% | 23.9 | 3.1 | Comparative Example |
| Admixture C-1 | $\alpha$-CaO·SiO$_2$<br>Li (in terms of lithium oxide): 0.002% | 30.0 | 4.5 | Example |
| Admixture C-2 | $\alpha$-CaO·SiO$_2$<br>Li (in terms of lithium oxide): 0.006% | 30.7 | 7.4 | Example |
| Admixture C | $\alpha$-CaO·SiO$_2$<br>Li (in terms of lithium oxide): 0.10% | 30.6 | 7.1 | Example |
| Admixture C-3 | $\alpha$-CaO·SiO$_2$<br>Li (in terms of lithium oxide): 0.015% | 31.0 | 9.0 | Example |
| Admixture C-4 | $\alpha$-CaO·SiO$_2$<br>Li (in terms of lithium oxide): 0.80% | 30.5 | 9.2 | Example |
| Admixture C-5 | $\alpha$-CaO·SiO$_2$<br>Li (in terms of lithium oxide): 0.90% | 30.3 | 8.9 | Example |
| Admixture C-6 | $\alpha$-CaO·SiO$_2$<br>Li (in terms of lithium oxide): 1.0% | 30.2 | 9.0 | Reference Example |
| Admixture C-7 | $\alpha$-CaO·SiO$_2$<br>Li (in terms of lithium oxide): 1.1% | 23.8 | 3.1 | Comparative Example |

[Experimental Example 3]

Cement admixtures A-8 to A-11 and Cement admixtures C-8 to C-11 were prepared in similar manners to the preparations of Cement admixture A and Admixture C in Experiment 1, except that the calcium sulfate of reagent-grade 1 was mixed in the respective preparations of Cement admixture A and Admixture C of Experiment 1 so that the content of sulfur became 0.5%, 0.8%, 1.0%, 1.5% in terms of oxide. Similar evaluations to that of Experiment 1 were carried out for the respective cement admixtures. The results are shown in Table 3.

Table 3

| | | Evaluation of carbonation reaction rate (%) | Amount of vaterite (%) | Remarks |
|---|---|---|---|---|
| Admixture A | $\gamma$-2CaO·SiO$_2$ Sulfur (in terms of oxide): 0% | 31.2 | 8.8 | Example |
| Admixture A-8 | $\gamma$-2CaO·SiO$_2$ Sulfur (in terms of oxide): 0.5% | 30.7 | 7.1 | Example |
| Admixture A-9 | $\gamma$-2CaO·SiO$_2$ Sulfur (in terms of oxide): 0.8% | 30.7 | 7.1 | Example |
| Admixture A-10 | $\gamma$-2CaO·SiO$_2$ Sulfur (in terms of oxide): 1.0% | 30.7 | 7.1 | Example |
| Admixture A-11 | $\gamma$-2CaO·SiO$_2$ Sulfur (in terms of oxide): 1.5% | 30.4 | 5.9 | Example |
| Admixture C | $\alpha$-CaO·SiO$_2$ Sulfur (in terms of oxide): 0% | 30.6 | 7.1 | Example |
| Admixture C-8 | $\alpha$-CaO·SiO$_2$ Sulfur (in terms of oxide): 0.5% | 29.9 | 5.1 | Example |
| Admixture C-9 | $\alpha$-CaO·SiO$_2$ Sulfur (in terms of oxide): 0.8% | 29.8 | 5.0 | Example |
| Admixture C-10 | $\alpha$-CaO·SiO$_2$ Sulfur (in terms of oxide): 1.0% | 29.8 | 5.1 | Example |
| Admixture C-11 | $\alpha$-CaO·SiO$_2$ Sulfur (in terms of oxide): 1.5% | 29.2 | 3.8 | Example |

[Experimental Example 4]

Admixture A or Admixture A-1, or Admixture C or Admixture C-1 was each mixed by 25 parts with respect to 100 parts of a cement to give a cement composition, and a mortal sample was prepared in accordance with JISR 5201 so that the water/cement composition ratio became 50% and the ratio of the cement composition to sand became 1 : 3 (mass ratio). After form removal at the age of 1 day, accelerated carbonation curing was carried out to each age shown in Table 4 under an environment of a temperature of 20°C, a relative humidity of 50% and a CO$_2$ concentration of 20%, and a condensation time, a compression strength and a length variation rate (carbonation time: 243 days, and the age was 250 days including 7 days of curing in water). The results are shown in the following Table 4.

Note that the summary of the respective materials is as mentioned below.

· Cement: normal Portland cement, manufactured by Denka Company Ltd., specific gravity: 3.15, Blaine specific surface area: 3,300 cm$^2$/g.
· Water: tap water
· Sand: JIS standard sand

<Evaluation Methods>

Condensation time: In accordance with JIS R 5201 "Physical testing methods for cement", the initiation time was measured (a formulation obtained by removing sand (ISO standard sand) from the formulation for a compression strength).
Compression strength: The compression strengths on the carbonation times of 1 day, and 3, 7 and 28 days were measured in accordance with JIS R 5201 "Physical testing methods for cement".
Length variation rate: In accordance with JIS A 6202 "Expansive additive for concrete", Annex B, the length variation rate at the age of 250 days was measured. However, the sample was form-released at 1 day after the casting, thereafter, aged in water for up to 7 days, and stored under an environment at an atmospheric temperature of 20°C and a relative humidity of 60%.

Table 4

| | | Condensation time (min) | Compression strength (N/mm$^2$) | | | | Length variation rate (%) | Remarks |
|---|---|---|---|---|---|---|---|---|
| | | | carbonation time (B) | | | | | |
| | | | 1 | 3 | 7 | 28 | | |
| Admixture A-1 | $\gamma$-2CaO·SiO$_2$ Li (in terms of lithium oxide): 0.002% | 185 | 12.4 | 18.4 | 28.8 | 48.3 | -0.051 | Example |
| Admixture A | $\gamma$-2CaO·SiO$_2$ Li (in terms of lithium oxide): 0.1% | 175 | 21.1 | 28.2 | 34.6 | 53.1 | -0.038 | Example |
| Admixture C-1 | $\alpha$-CaO·SiO$_2$ Li (in terms of lithium oxide): 0.002% | 180 | 4.1 | 6.3 | 9.8 | 17.9 | -0.052 | Example |
| Admixture C | $\alpha$-CaO·SiO$_2$ Li (in terms of lithium oxide): 0.1% | 175 | 7.0 | 9.4 | 11.5 | 19.1 | -0.037 | Example |

[Experimental Example 5]

In Experimental Example 4, Admixture A or Admixture A-1, or Admixture C or Admixture C-1 was each mixed with 100 parts of a cement so as to have the percentage shown in the following Table 5 to give a cement composition, and a mortal sample was prepared in accordance with JISR 5201 so as to have a water/ cement composition ratio of 50% and a ratio of the cement composition to sand of 1 : 3 (mass ratio). At an age of 1 day, after mold release, a compression strength (after a carbonation time of 7 days) was measured in a similar manner to Experimental Example 4, except that accelerated carbonation curing was carried out on each under an environment of a temperature of 20°C, a relative humidity of 50% and a CO$_2$ concentration of 20% up to each age. The results are shown in the following Table 5.
Compression strength: A compression strength was measured in accordance with JIS R 5201 "Physical testing methods for cement".

Table 5

| | | Compression strength at after 7 days of carbonation time (N/mm$^2$) | | | Remarks |
|---|---|---|---|---|---|
| | | Content of admixture (parts) | | | |
| | | 25 | 50 | 70 | |
| Admixture A-1 | $\gamma$-2CaO·SiO$_2$ Li (in terms of lithium oxide): 0.002% | 28.8 | 32.2 | 33.0 | Example |
| Admixture A | $\gamma$-2CaO·SiO$_2$ Li (in terms of lithium oxide): 0.1% | 34.6 | 39.4 | 40.3 | Example |
| Admixture C-1 | $\alpha$-CaO·SiO$_2$ Li (in terms of lithium oxide): 0.002% | 9.8 | 11.1 | 11.6 | Example |
| Admixture C | $\alpha$-CaO·SiO$_2$ Li (in terms of lithium oxide): 0.1% | 11.5 | 14.2 | 14.7 | Example |

Industrial Applicability

The present invention can be preferably used for a cement admixture used in the civil engineering and architecture fields, etc.

**Claims**

1.  A cement admixture containing one kind or two or more kinds of non-hydraulic compound(s) selected from the group consisting of $\gamma$-2CaO·SiO$_2$, 3CaO·2SiO$_2$, $\alpha$-CaO·SiO$_2$, and calcium magnesium silicate, wherein the non-hydraulic compound contains Li at an amount of 0.001 to 0.90% by mass in terms of lithium oxide (Li$_2$O).

2.  The cement admixture according to claim 1, which contains, as chemical components, 0.002 to 0.5 parts by mass of Li$_2$O, 60 to 70 parts by mass of CaO, 30 to 45 parts by mass of SiO$_2$, and 0.5 to 5 parts by mass of Al$_2$O$_3$ in 100 parts by mass of the cement admixture.

3.  The cement admixture according to claim 1 or 2, wherein the content rate of sulfur in the non-hydraulic compound is 1.0% by mass or less in terms of oxide.

4.  The cement admixture according to any one of claims 1 to 3, wherein the content rate of the non-hydraulic compound is 70% by mass or more.

5.  The cement admixture according to any one of claims 1 to 4, wherein the non-hydraulic compound is $\gamma$-2CaO·SiO$_2$.

6.  Use of the cement admixture according to any one of claims 1 to 5 for preparing a cement composition.

**Patentansprüche**

1.  Zementzusatzstoff, enthaltend eine Art oder zwei oder mehr Arten nichthydraulischer Verbindungen, ausgewählt aus der Gruppe, bestehend aus $\gamma$-2CaO·SiO$_2$, 3CaO·2SiO$_2$, $\alpha$-CaO·SiO$_2$ und Calciummagnesiumsilicat, wobei die nichthydraulische Verbindung Li in einer Menge von 0,001 bis 0,90 Masse-% in Form von Lithiumoxid (Li$_2$O) enthält.

2.  Zementzusatzstoff nach Anspruch 1, die als chemische Komponenten 0,002 bis 0,5 Masseteile Li$_2$O, 60 bis 70 Masseteile CaO, 30 bis 45 Masseteile SiO$_2$ und 0,5 bis 5 Masseteile Al$_2$O$_3$ in 100 Masseteilen des Zementzusatzstoffs enthält.

3.  Zementzusatzstoff nach Anspruch 1 oder 2, wobei der Schwefelgehalt in der nichthydraulischen Verbindung 1,0 Masse-% oder weniger, in Bezug auf Oxid, beträgt.

4.  Zementzusatzstoff nach einem der Ansprüche 1 bis 3, wobei der Gehalt der nichthydraulischen Verbindung 70 Masse-% oder mehr beträgt.

5.  Zementzusatzstoff nach einem der Ansprüche 1 bis 4, wobei die nichthydraulische Verbindung $\gamma$-2CaO·SiO$_2$ ist.

6.  Verwendung des Zementzusatzstoffs nach einem der Ansprüche 1 bis 5 zur Herstellung einer Zementzusammensetzung.

**Revendications**

1.  Adjuvant de ciment contenant un type ou deux types ou plus de composé(s) non hydraulique(s) choisi(s) parmi le groupe constitué de $\gamma$-2CaO·SiO$_2$, 3CaO·2SiO$_2$, $\alpha$-CaO·SiO$_2$ et de silicate de magnésium-calcium, dans lequel le composé non hydraulique contient du Li en une quantité de 0,001 à 0,90 % en masse en termes d'oxyde de lithium (Li$_2$O).

2.  Adjuvant de ciment selon la revendication 1, qui contient, en tant que composants chimiques, 0,002 à 0,5 partie en masse de Li$_2$O, 60 à 70 parties en masse de CaO, 30 à 45 parties en masse de SiO$_2$, et 0,5 à 5 parties en masse

d'Al$_2$O$_3$ dans 100 parties en masse de l'adjuvant de ciment.

3. Adjuvant de ciment selon la revendication 1 ou 2, dans lequel le taux de teneur en soufre dans le composé non hydraulique est de 1,0 % en masse ou moins en termes d'oxyde.

4. Adjuvant de ciment selon l'une quelconque des revendications 1 à 3, dans lequel le taux de teneur en composé non hydraulique est de 70 % en masse ou plus.

5. Adjuvant de ciment selon l'une quelconque des revendications 1 à 4, dans lequel le composé non hydraulique est $\gamma$-2CaO·SiO$_2$.

6. Utilisation de l'adjuvant de ciment selon l'une quelconque des revendications 1 à 5 pour préparer une composition de ciment.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006182583 A
- JP 2006131474 A